# EUROPEAN PATENT APPLICATION

(11) **EP 3 165 763 A1**
(43) Date of publication of application: **10.05.2017**
(21) Application number: 14736419.4
(22) Date of filing: 03.06.2014
(51) Int. Cl.: F03D 3/04

(54) **A CYCLONIC WIND ENERGY CONVERTER**

(71) Applicant: Centrales Energéticas Ciclónicas, S. L., 28120 Algete (ES)
(72) Inventor: GRACIA BOUTHELIER, Mercedes, E-28120 Algete (ES); PRIETO SANTIAGO, Francisco Javier, E-28120 Algete (ES); PRIETO GRACIA, Francisco Javier, E-28120 Algete (ES); PRIETO GARCIA, Ignacio, E-28120 Algete (ES); PRIETO GRACIA, David, E-28120 Algete (ES); PRIETO GRACIA, Mercedes, E-28120 Algete (ES); PRIETO GRACIA, Ana, E-28120 Algete (ES); PRIETO GRACIA, Jorge, E-28120 Algete (ES)
(74) Representative: Pérez Gómez de Zamora, Carlos
(86) International application number: PCT/ES2014/070452
(87) International publication number: WO 2015/185765

(57) **Abstract**

The present invention relates to a cyclonic or anti-cyclonic conversion generator comprising a hollow and rigid structure (1) having at the upper end thereof diffusing deflectors (2) to produce a venturi effect and means for converting the kinetic energy of the outside wind into electrical energy, said hollow and rigid structure comprising: means for generating a primary flow (3) and means for generating a secondary flow (4) or vortex core, using convectors (5), (6); and means that facilitate the vertical movement of the primary flow and the secondary flow, using slopes that increase the peripheral flow (12) or a central protrusion or convex surface (11). The generator can be used for generating cyclones and anti-cyclones and can be used with any fluid, such as wind or water. The generator allows the speed of the fluid to be increased, concentrating said fluid on the periphery, which results in improved performance and effectiveness.

## Description

### Objet of the invention

The object of the present invention, such as the title of the invention sets, is to provide a cyclonic or anti-cyclonic conversion generator.

The generator comprises a hollow and rigid structure having at the upper end thereof deflector diffusers to produce a venturi effect, and means for converting kinetic wind energy into electrical energy, wherein the hollow and rigid structure comprises means for generating a primary flow and means for generating a secondary flow or vortex core, vortex effect or mini-cyclonic.

The generator presents elements and a design such that an effect of increasing speed in the ducted output flow is achieved, while thanks to the slopes to effect rotation of the primary flow, a more intense flow is achieved at the periphery of the primary flow so it produces a greater torque at the propeller blades of the generator.

Therefore, the present invention falls within the scope of cyclonic generators and particularly in the scope related to their construction features.

### Background of the invention

Cyclonic or anti-cyclonic conversion towers are known in the art being systems that artificially reproduce confined turbulent flows, called vortices, or turbulent flows in spiraling rotation with closed current paths which may be ascending or descending, from laminar wind flows, integrating inside the tower the different environmental energies: kinetic wind energy, baric energy due to differences in atmospheric pressure at different levels of the atmosphere, convective thermal energy and also thermal energy from condensation.

Conventional cyclonic or anti-cyclonic conversion towers are substantially made up of a hollow central conduit, called vortical duct, from which, almost tangentially, two or more membranes, screens or vertical structures emerge, whose generatrices have a curved profile of aerodynamic cross-section. Two of these membranes or screens, associated to the corresponding section of the central vortical duct, constitute a convector. As a general rule, there are usually five convectors per level, when they can be orientated in all directions. Two of these membranes or screens of each convector are supported by means of stiffeners, which are horizontal plates with an aerodynamic cross-section. At the beginning of the convectors of the vortical duct, the blocking devices are placed, which allow the windward entry of the laminar outer flow but not the exit of flow from the vortical duct to the outside to leeward. In the upper part of the cyclonic converter, there is the diffuser, which prevents the effect of shearing on the exit vortex caused by the flow of laminar air outside the tower. The deflector is situated in the lower part of the converter, which prevents the depression created by the absorption of the vertical flow.

Normally, at the base and at the upper part of the tower, the aero-turbines, contrarotatory or not, are placed with the electrical generator, water pump, compressor or any element capable of generating energy Optionally, a hothouse may be added or devices for heating the air and evaporating water, with control of the thermal conditions, including a base in the form of a shallow pool of water in order to heat the air and attempt to saturate it with water vapour, either from the hothouse itself or from one or several hydric hothouses. A cyclonic or anti-cyclonic conversion tower with these features is disclosed in the Spanish Patent number 493.713.

However, these cyclonic or anti-cyclonic conversion towers have many mechanical and cost drawbacks, derived largely from the construction of conventional blocking devices. As may be observed in Spanish Patent number 493.713, the blocking devices are movable screens with an aerodynamic profile which rest upon damping arms which turn around their support on one of the membranes or screens of the convector, in such a way that the blocking devices open when they are in a convector which must allow the passage of the exterior fluid or flow to the vortical duct, and close when the fluid or flow attempts to leave the central vortical duct outwards.

A first problem consists in reducing the performance of the vortex, and even the destruction of same due to the partial penetration of the blocking device into the vortical duct.

Moreover, and secondly, the great stresses in the supporting points of the arms which hold the blocking devices, in the membranes or screens of the convectors and in the blocking devices themselves, involve a considerable difficulty for construction. Bear in mind, for example, that for a 100 Mw conversion tower, each blocking device would consist of screens of 70 m long by 3 m high, which holding and moving involve enormous stresses on the supporting points of the holding arms. This problem is further aggravated by the fact that sudden variations in wind speed or direction will increase the stresses. As a result of these stresses, the shock absorbers and ball-and-socket joints of the holding arms and the blocking devices themselves undergo great wear, and in practice the materials and technology to make them at an acceptable cost are not known.

Accordingly, the construction of these conversion towers requires special alloys of high rigidity but at the same time very light, which considerably increases the cost of said conversion towers.

Moreover, their maintenance is highly expensive and risky, requiring a large number of skilled personnel. The high construction and maintenance costs as well as the limited performance caused by a vortex which is defective as a consequence of the partial introduction of the blocking devices in the central vortical duct, prevent the massive use of conversion towers for energy generation, None has been built to date.

It is also known the cyclonic or anti-cyclonic conversion tower described in patent ES 2166663 which comprises a central vortical duct; at least one convector made up of two vertical membranes or screens, generated by a curve and which are limited at one of their sides by the central vortical duct; at least two stiffeners per convector; a blocking device (6) per convector, two per convector or more; a diffuser; a deflector; and means for converting kinetic wind energy, baric energy of position and convective energy and thermal energy from condensation into electrical or mechanical energy; wherein the blocking device can turn on the outer guiding crown of the central vortical duct.

However, this cyclonic conversion generator presents aspects that can be improved as to avoid breaking the exit vortex, producing a venturi effect of absorption of the exit vortex, increasing peripheral output flow to make the torque on the blades greater and so improve power and energy efficiency

### Description of the invention

The object of the present invention is a cyclonic conversion generator, i.e., an electrical energy generator from formation of small artificial cyclones or vortexes.

Energy is generated by the action of the more or less laminar wind from the outside to the inside of the cyclonic tower, where a small cyclone or anti-cyclone is formed and, in its cyclonic or anti-cyclonic movement, i.e., upward or downward, electricity is generated by moving the blades of a turbine which is coupled to a generator placed on one end of the cyclonic generator.

A cyclone or vortex comprises a first turbulent flow that rotates in an ascending manner, leaving central internal space through which a second flow or vortex core flows, called the eye of the hurricane, equivalent to a very stable solid cylinder in upward rotation that sucks air from the base.

In case of an anti-cyclone, the movement of the primary and secondary flows is reversed, the primary flow circularly rotates downward, while the secondary flow or vortex core is like a solid cylinder in downward rotation that sucks air from the top.

In the southern hemisphere, rotation of the primary and secondary flows is in the opposite direction as indicated above.

The cyclonic conversion generator comprises a hollow and rigid structure which, at its upper end, has deflector diffusers and means for converting kinetic wind energy into electrical energy, wherein the hollow and rigid structure comprises means for generating a primary flow and means for generating a secondary flow or vortex core.

The hollow and rigid structure, in a possible embodiment, adopts a cylindrical shape and preferably with an increasing section from the base to the top, with slightly curved walls in the form of a hyperbole or straights.

Deflector diffusers seek to achieve a venturi effect on the output mini-cyclon by increasing the output power of air. Producing deflection and diffusion of incoming air, a suction effect on the mini-cyclon air is produced, increasing its output speed. Deflector diffusers are arranged in a stepped way increasing from its base towards the upper end in order to form several concentric flows which produce a venturi effect on the output fluid.

Means for generating a primary flow comprise a series of convergent convectors channeling air from outside into the inside of the hollow structure so that forcing air from outside to rotate therein and cooperates in the generation of the secondary flow or vortex core.

Means for generating a secondary flow comprise second convectors that direct air towards the vortex core. Through this flow, the potential and thermal convective energy is used by the difference in pressure and temperature.

Convergent convectors are arranged as curved profiles along the part of the hollow and rigid structure dedicated to the generation of the primary vortex flow. Their aim is to capture, integrate, focus and direct air into the hollow structure forcing the air to rotate therein.

The number of convectors is at least two, but it could be up to five or more.

The number of convectors will depend on whether the rigid hollow structure can turn or not. If it can turn, at least two convectors are enough, the hollow structure being oriented so as to capture and channel air to the inside through the convectors via low power generators.

If the hollow structure cannot turn, there will be a number of convectors so as to cover the whole perimeter of the hollow, structure, also having means for opening and closing the convectors inlets so that at least two entries of the convectors are always opened.

Thanks to the presence of the convectors and how the cyclone or anti-cyclone is generated, it is achieved that the outside wind fluctuations do not affect the generation, since the cyclone formed in the inside produces a damping effect on fluctuations due to the moment of inertia of the cyclone.

In order to facilitate the primary flow rotation, either in an ascending or descending manner, along the input surface defined by convectors, said surface is divided by partition walls in the form of slopes, which are inclined such that, apart from the input wind rotation, rotation in an upward or downward direction is provided.

Furthermore, the rigid structure, in the case of formation of a cyclone, has, at its base, a projection or continuous convexity profile in the form of a central protuberance, so that the secondary flow convectors bring air into the inside producing its rotation, while said projection causes upward movement of the secondary flow.

In the case of a cyclonic conversion generator, the relative arrangement of the various elements is such that the hollow structure has the secondary flow convectors or vortex core at its base, having the primary flow convectors on the rest of the structure, and having the deflector diffusers that generate a venturi effect at its upper end, while having, inside its upper end, a support structure of vertical axis generator and central turbine on which shorter ducted blades are fixed.

In the case of an anti-cyclonic conversion generator, the relative arrangement of the various elements is such that the hollow structure has deflector diffusers that generate a downstream venturi effect at its upper end, followed by the secondary flow convectors or vortex core, having the primary flow convectors on the rest of the structure, to finally have means for air channeling towards horizontal axis generating means.

Along the present description, reference has been made to the outside wind as a generator fluid, also being applicable to other fluids such as water, so that the conversion generator object of the invention is also applicable in media such as water using ocean currents.

Thanks to the presence of the deflector diffusers, an effect of speed increase in the output flow is produced, while thanks to the effect of rotation of the primary flow, an increased flux is achieved at the periphery of the primary flow producing a greater torque at the propeller blades of the generator.

Thanks to the described features, a means for energy generation is achieved, having great power vertical axis generator and turbine with shorter ducted blades, that:
- can be installed on the ground or "on-shore", which avoids the enormous complications of mounting, maintenance and connection involving generation systems at sea or "off-shore"
- the cost per Mw installed is half than the three-bladed generation systems on the ground and four to six times than the three-bladed at sea.
- its energy production costs are less than half the three-bladed generation systems.
- it produces in the order of 10 to 30 times more energy per unit than the three-bladed systems.
- maintenance costs are very low because the generator and turbine are internal.
- on an equal production of energy, 20 to 30 times less ground is occupied than the three-bladed systems.
- the produced energy is of better quality and control.
- no turbulences occur leeward, only shadow effect.

### Description of the figures

To complement the present description and for a better understanding of the characteristics of the invention, according to a preferred practical embodiment thereof, a set of drawings are attached as an integral part of said description where, by way of illustrative and not limiting example, the following is shown:
Figure 1 shows a front view representing a cyclonic conversion generator
Figure 2 shows a representation of the same generator wherein some construction details are shown.
Figure 3 shows a section wherein convectors are shown.
Figure 4 shows a view wherein a blocking device mounted within the generator is shown.
Figure 5 shows a blocking device divided into portions or sections.
Figure 6 shows the generator-wind turbine assembly and its attachment to the rest of the structure.
Figure 7 shows a detail of the inside of the wind turbine.

### Preferred embodiment of the invention.

In view of the figures, a preferred embodiment of the proposed invention is described below.

The preferred embodiment described below relates to a cyclonic conversion generator, being the same principles applicable to an anti-cyclonic conversion generator, varying the elements arrangement but with the same necessary elements.

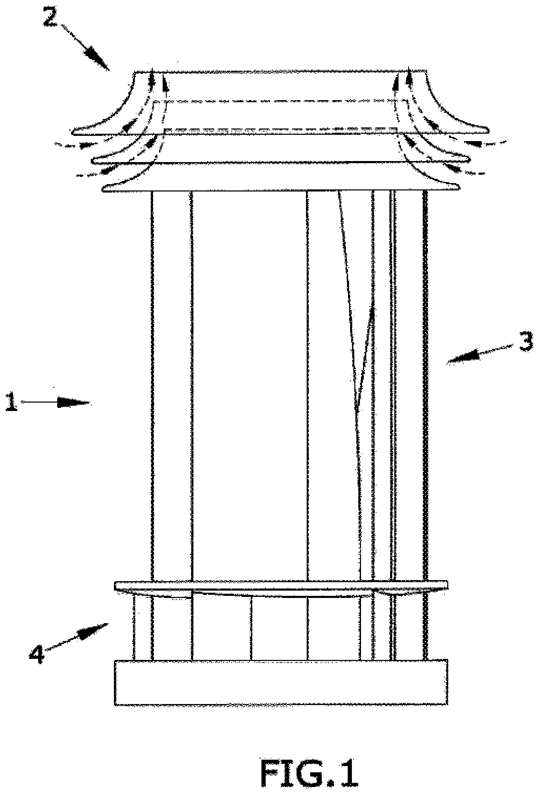

In Figure 1 we can observe a Cyclonic conversion generator comprising a hollow and rigid structure (1), at the top end of which it is arranged deflector diffusers (2).

The hollow and rigid structure is, preferably, cylindrical with an increasing section from the base to the top, with straight or curved walls in the form of a hyperbole.

The deflector diffusers (2) protrude from the perimeter of the hollow structure (1) at its upper end, being disposed in a stepped way increasing toward the top end in order to form several concentric flows which produce a venturi effect on the output fluid.

The hollow structure (1) comprises an area with means for forming a secondary flow (4) or vortex core. In this case of cyclonic conversion, said means are at the base of the hollow structure (1).

On the rest of the hollow structure (1), generating means of the primary flow (3) are arranged.

Means for forming the primary flow (3) comprise convectors (5) that, as previously explained, will be at least two, but could be a number such as to cover the entire perimeter of the hollow structure (1). The input surface defined by each of the convectors, may be divided by a series of partitions or separators in the form of a slope (12) which is inclined to promote the upward rotation of the primary flow.

Said slopes (12) have an upward inclination and a reduced section as they penetrate inside the hollow structure.

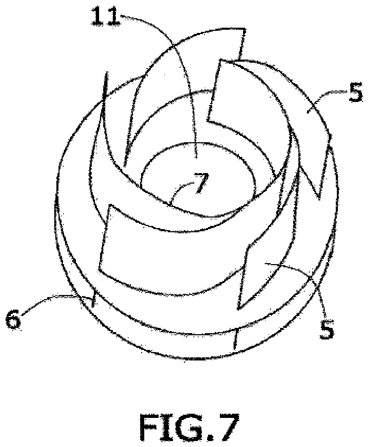

The forming means of the secondary flow (4) or vortex core comprise a series of convectors (6) and can additionally have, as seen in figure 7, a projection or central convexity (11) of a uniform profile that promotes the upward movement of the secondary flow or vortex core.

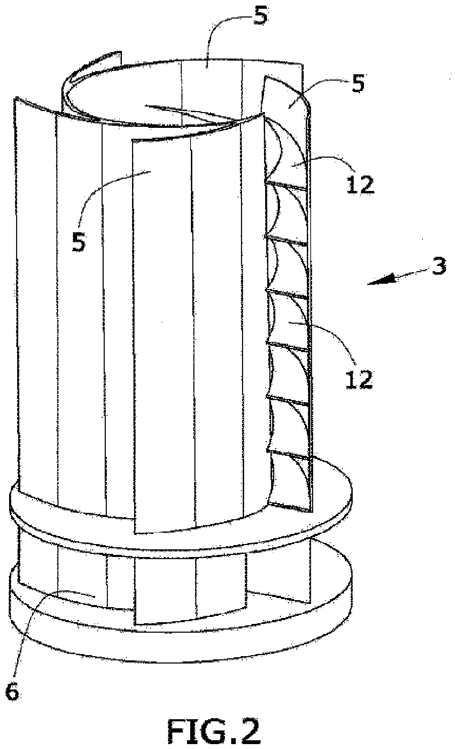

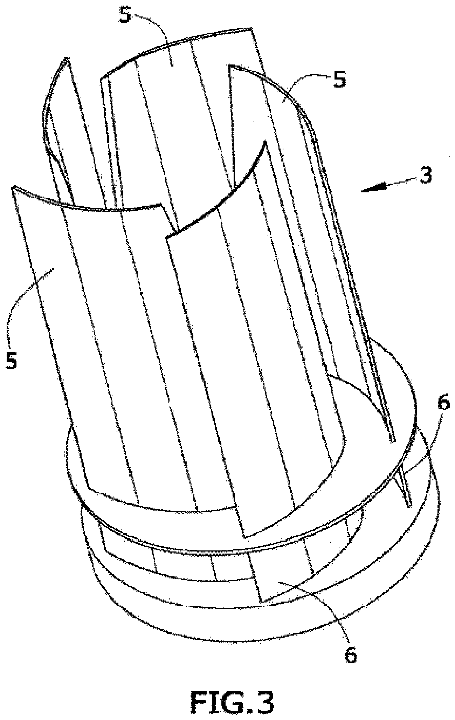

In Figures 2 and 3, several convectors (5) for generating secondary flow are shown. In this case, the convectors (5) cover the entire perimeter of the hollow structure (1), since it is a fixed structure, so that they also have a blocking device (7) movable so as to leave always open at least two of the entries defined by two blocking devices.

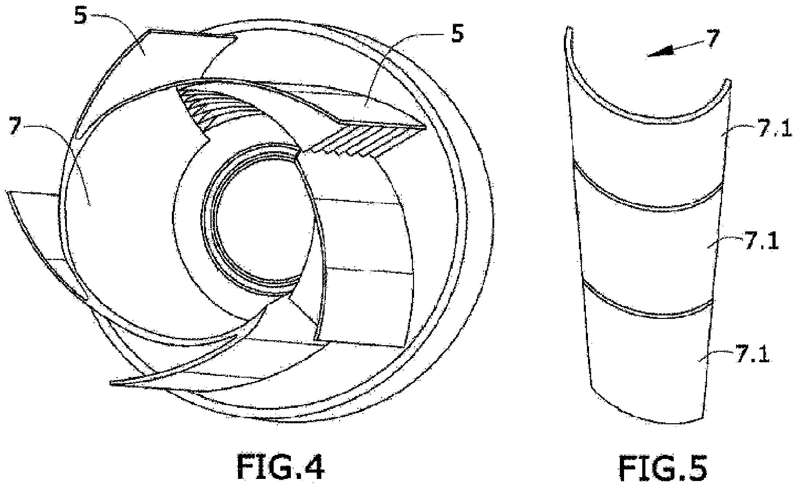

Since the hollow structure (1) may be of several tens of meters, the blocking device shall have a length equal to the height of the hollow structure (1), so that, in order to manufacture and move such a large blocking device, the blocking device (7) can be divided into portions or sections (7.1), as shown in Figure 5.

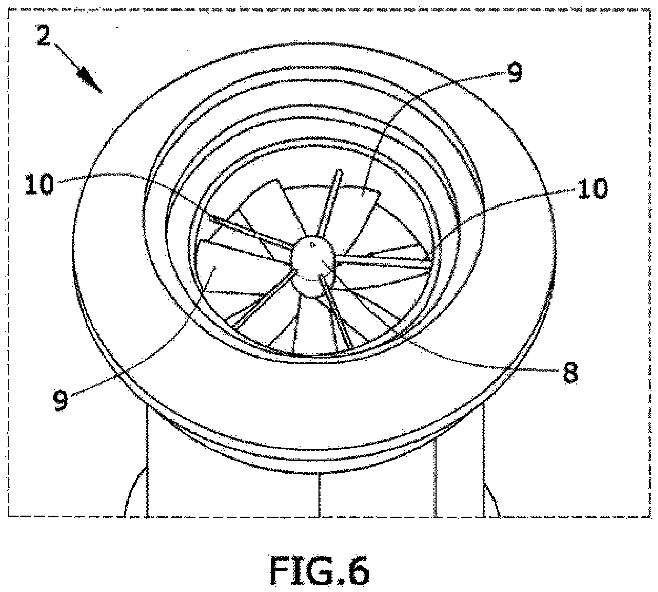

Figure 6 shows how the electric generator is mounted in the hollow structure (1), the turbine (8) being provided in the central part supported by aerodynamic-section beams or supports (10) and said supports (10) including access paths to the turbine (8).

From the turbine (8), generating blades (9) emerge that makes it possible to reach almost the inner wall of the hollow structure (1) in order to achieve the maximum flow running through the structure.

Turbines may comprise three, five, seven or nine ducted blades (9), which will be adjusted as much as possible to the output vortex duct in order to obtain a maximum performance and, even, embedded in the tubular profile of the output vortex conduit Efficiency may exceed 95% of the output vortex flow.

Regarding the type of generator to be used, multipolar permanent magnet generators (PMG) are preferable, because the starting torque is much lower than in conventional electromagnetic generators.

Once sufficiently described the nature of the present invention as well as implementation of the same, it has to be noted that, in its essence, it may be put into practice with another embodiments that may differ in detail from that indicated herewith by way of example, and which will also include the scope of protection, provided they do not alter, change or modify its fundamental principle.

## Claims

1. A cyclone or anti-cyclone conversion generator, **characterised in that** it comprises: a hollow, rigid structure (1), on the upper end of which there are a number of diffuser deflectors (2), designed such that they produce a Venturi effect, with a number of energy conversion means, for converting the kinetic energy of the external wind into electrical energy, where the hollow, rigid structure comprises a number of primary flow generation means (3) and a number of secondary flow or vortex core generation means (4).

2. The cyclone or anti-cyclone conversion generator according to claim 1, **characterised in that** the diffuser deflectors (2) are arranged in a step formation that grows from the base thereof to the upper end, with the aim of forming various concentric flows that produce a Venturi effect on the vortex output fluid.

3. The cyclone or anti-cyclone conversion generator according to claim 1, **characterised in that** the primary flow generation means (3) comprise a series of convergent convectors (5), which channel the external air towards the inside of the hollow structure, in such a way that they force the air to rotate therein and give an upwards or downwards vertical component produced by the ramps, also taking part in increasing the generation of the secondary flow or vortex core.

4. The cyclone or anti-cyclone conversion generator according to claim 3, **characterised in that** the number of convectors (5) is at least two, and they are mounted to the hollow, rigid structure (1), which may rotate and direct itself relative to the wind.

5. The cyclone or anti-cyclone conversion generator according to claim 3, **characterised in that** the number of convectors (5) is such that they cover the entire perimeter of the hollow structure (1), also comprising a moveable seal (7) capable of closing the intake of all the convectors except at least two of the same.

6. The cyclone or anti-cyclone conversion generator according to claim 5, **characterised in that** the seal (7) is divided into stretches or sections (7.1).

7. The cyclone or anti-cyclone conversion generator according to claim 3, **characterised in that** the intake surface defined by each one of the convectors (5) is divided by a series of partitions or separators by way of ramps (12), which slope in order to facilitate the increase in upwards rotation of the primary flow.

8. The cyclone or anti-cyclone conversion generator according to claim 1, **characterised in that** the secondary flow generation means (4) comprise a number of second convectors (6), which direct the air towards the vortex core.

9. The cyclone or anti-cyclone conversion generator according to claim 8, **characterised in that** the secondary flow generation means (4) comprise a central projection or convexity (11) with a uniform profile, which facilitates the upwards movement of the secondary flow or vortex core, having a converging conical frustum with the output diameter of the vortex core.

10. The cyclone or anti-cyclone conversion generator according to claim 1, **characterised in that** the electrical generation means comprise a turbine (8), from which multiple generation blades (9) emerge, which fit closely to the ducting thereof, the turbine (8) being supported by a number of beams or supports (10) fixed to the walls of the hollow structure (1), and which has an aerodynamic cross-section, said supports (10) furthermore including a number of access routes to the generator turbine (8).

11. The cyclone or anti-cyclone conversion generator according to claim 1, **characterised in that** the hollow, rigid structure (1) is cylindrical in shape with a cross-section that grows from the base to the upper portion.

12. The cyclone or anti-cyclone conversion generator according to claim 10, **characterised in that** the turbine may have three, five, seven or nine ducted blades (9), which shall be as close-fitting as possible to the vortex output conduit, and may even be embedded in the tubular profile of the vortex output conduit.

13. The cyclone or anti-cyclone conversion generator according to claim 10, **characterised in that** the generator is a multi-polar permanent magnet generator (PMG).

## Amended claims

### Amended claims under Art. 19.1 PCT

**1.** A cyclonic or anti-cyclonic conversion generator comprising:
- a hollow and rigid structure (1) having at the upper end thereof deflector diffusers (2),
- means for converting kinetic energy of outside wind into electrical energy,
- wherein the hollow and rigid structure comprises means for generating a primary flow (3) and means for generating a secondary flow (4) or vortex core,
- wherein means for generating a primary flow (3) comprise a series of convergent convectors (5) channeling the air from outside into the inside of the hollow structure,
**characterized in that**
- the deflector diffusers (2) are arranged in a stepped way increasing from its base towards the upper end in order to form several concentric flows which produce a venturi effect on the output vortex fluid,
- the input surface defined by each convector (5) is divided by a series of partitions or separators in the form of slopes (12) which are inclined to promote the increase in rotation of the primary flow and provides an upward or downward vertical component produced by the slopes and cooperates in the increased generation of the secondary flow or vortex core and hence the vortex flow.

**2.** A cyclonic or anti-cyclonic conversion generator according to claim 1, **characterized in that** the number of convectors (5) is at least two and are mounted on the hollow and rigid structure (1) which can be turned and faced relative to wind.

**3.** A cyclonic or anti-cyclonic conversion generator according to claim 1, **characterized in that** the number of convectors (5) is such as to cover the whole perimeter of the hollow structure (1) and comprises a movable blocking device (7) able to close the inlet of all convectors except at least two of them.

**4.** A cyclonic or anti-cyclonic conversion generator according to claim 3, **characterized in that** the blocking device (7) is divided into portions or sections (7.1).

**5.** A cyclonic or anti-cyclonic conversion generator, according to claim 1, **characterized in that** means for generating a secondary flow (4) comprise second convectors (6) that guide the air towards the vortex core.

**6.** A cyclonic or anti-cyclonic conversion generator, according to claim 5, **characterized in that** means for generating a secondary flow (4) comprise a projection or central convexity (11) with a uniform profile promoting the upward movement of the secondary flow or vortex core having a trunk cone matching the vortex core output diameter.

**7.** A cyclonic or anti-cyclonic conversion generator according to claim 1, **characterized in that** electrical generating means comprise a turbine (8) from which a plurality of ducted generating blades (9) emerge, the turbine (8) being supported by beams or supports (10) attached to the walls of the hollow structure (1) and having an aerodynamic section, further including said supports (10) access paths to the turbine-generator (8).

**8.** A cyclonic or anti-cyclonic conversion generator according to claim 1, **characterized in that** the hollow and rigid structure (1) has an increasing section from the base to the top.

**9.** A cyclonic or anti-cyclonic conversion generator according to claim 7, **characterized in that** the turbine may comprise three, five, seven or nine ducted blades (9), which are adjusted to the output vortex duct and even embedded in the tubular profile of the output vortex conduit.

**10.** A cyclonic or anti-cyclonic conversion generator, according to claim 7, **characterized in that** the generator is a multipolar permanent magnet generator (PMG).
